# EUROPEAN PATENT SPECIFICATION

(11) **EP 3 957 492 B1**
(45) Date of publication and mention of the grant of the patent: **12.04.2023**
(21) Application number: 21191445.2
(22) Date of filing: 16.08.2021
(51) Int. Cl.: B60B 1/08, B60B 21/02

(54) **WHEEL FOR STRADDLED VEHICLES, AND STRADDLED VEHICLE**
RAD FÜR MOTORRÄDER SOWIE MOTORRAD
ROUE POUR VÉHICULES À CALIFOURCHON ET VÉHICULE À CALIFOURCHON

(30) Priority: 19.08.2020 JP 2020138873
(43) Date of publication of application: 23.02.2022
(73) Proprietor: Yamaha Hatsudoki Kabushiki Kaisha, Iwata-shi, Shizuoka 438-8501 (JP)
(72) Inventor: TSUKAMOTO, Kohei, Shizuoka, 438-8501 (JP); FUKUJI, Hidehiro, Shizuoka, 438-8501 (JP); YAMAGUCHI, Masaya, Shizuoka, 438-8501 (JP)
(74) Representative: Grünecker Patent- und Rechtsanwälte PartG mbB

(56) References cited:
- WO-A1-2015/186422
- DE-A1- 3 244 203
- US-A1- 2002 002 862

## Description

The present invention relates to a wheel for straddled vehicles according to the preamble of independent claim 1 and a straddled vehicle. Such a wheel for straddled vehicles can be taken from the prior art document WO 2015/186422 A. Prior art document US 2002/0002862 A1 discloses a cast wheel. The wheel includes flange sections, bead seat sections provided on inner sides of the flange sections, hump sections protuberantly molded on an inner side of the bead seat sections, a rim drop section dented between the hump sections, and the recessed section which is provided in the rim drop section. The wheel is formed with an integrally molded weight section for balancing the tire air pressure detecting device with the rim at a position shifted at an angle of 180° in a peripheral direction from a position mounted with an tire air pressure detecting device 41 on the rim 53, that is, from the recessed section.

In recent years, wheels for straddled vehicles are required to further decrease in weight. By reducing the weight of wheels, it is possible to improve the vehicle's dynamic performance, fuel economy, and so on.

Various techniques have been proposed to reduce the weight of wheels. For example, it has been proposed to use a light alloy, such as an aluminum alloy, as the material of the wheel. It has also been proposed to reduce the weight on the basis of the shape of the wheel. For example, JP 3878500 B2 discloses adopting a substantially C-shape for a cross-sectional shape of spokes.

Hence, while providing necessary strength, a further weight reduction for wheels for straddled vehicles is possible.

The present invention has been made in view of the above problem, and an objective thereof is to provide a wheel for straddled vehicles which allows for suitable weight reduction while providing necessary strength. According to the present invention said object is solved by a wheel for straddled vehicles having the features of independent claim 1. Preferred embodiments are laid down in the dependent claims.

The present specification discloses wheels for straddled vehicles and straddled vehicles as recited in the appended claims.

According to the present invention, there is provided a wheel for straddled vehicles which allows for suitable weight reduction while providing necessary strength.

### BRIEF DESCRIPTION OF THE DRAWINGS

FIG. 1 is a side view schematically showing a wheel 100 for straddled vehicles according to an embodiment of the present teaching.
FIG. 2 is a diagram showing a cross-sectional shape at one end of an inter-spoke section 21 having a thickness-inflating structure.
FIG. 3 is a diagram showing a cross-sectional shape at the substantial center of the inter-spoke section 21 having a thickness-inflating structure.
FIG. 4 is a graph showing a profile of rim wall thickness of a first inter-spoke section 21A along the circumferential direction.
FIG. 5 is a side view schematically showing the wheel 100 for straddled vehicles.
FIG. 6 is a side view showing a wheel 100 for straddled vehicles each of whose inter-spoke section 21 includes a rib 22.
FIG. 7 is a cross-sectional view taken along line 7A-7A' in FIG. 6.
FIG. 8 is a graph showing a profile of rim wall thickness of a first inter-spoke section 21A having a rib 22 along the circumferential direction.
FIG. 9 is a left side view schematically showing a motorcycle 200.

### DETAILED DESCRIPTION

Hereinafter, embodiments of the present teaching will be described with reference to the drawings.

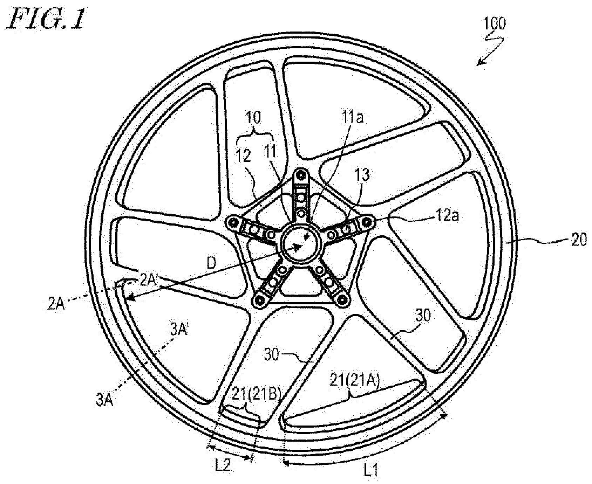

With reference to FIG. 1, a wheel for straddled vehicles (hereinafter simply referred to as a "wheel") 100 according to an embodiment of the present teaching will be described. FIG. 1 is a side view schematically showing the wheel 100.

As shown in FIG. 1, the wheel 100 includes a hub 10, a rim 20, and a plurality of spokes 30. The wheel 100 is typically made of a metal material (e.g., an aluminum alloy). The wheel 100 may be produced by using a casting technique, for example.

The hub 10 includes: an inner cylindrical portion 11 through which a wheel shaft is inserted; and an outer cylindrical portion 12 surrounding the inner cylindrical portion 11. The inner cylindrical portion 11 has a substantially cylindrical shape. The wheel shaft is to be inserted in an aperture (wheel-shaft insertion hole) 11a that is defined by an inner peripheral surface of the inner cylindrical portion 11. A direction that is parallel to the center axis of the wheel-shaft insertion hole 11a (wheel axis) is the wheel axis direction (hereinafter simply referred to as the "axial direction"). The inner cylindrical portion 11 and the outer cylindrical portion 12 are linked by a plurality of connecting portions 13. The plurality of connecting portions 13 extend from the inner cylindrical portion 11 toward the outer cylindrical portion 12, along the wheel radius direction (hereinafter simply referred to as the "radial direction"). A plurality of bosses 12a are provided on the outer cylindrical portion 12. A brake disc is to be fastened on the plurality of bosses 12a. Note that the configuration of the hub 10 is not limited to the example shown.

The rim 20 has an annular shape, and extends along the wheel circumference direction (hereinafter simply referred to as the "circumferential direction"). A tire is to be mounted on an outer peripheral surface of the rim 20.

The plurality of spokes 30 connect the hub 10 and the rim 20. More specifically, the plurality of spokes 30 connect an inner peripheral surface of the rim 20 and the outer cylindrical portion 12 of the hub 10. Although the example shown in FIG. 1 illustrates the wheel 100 as having ten spokes 30, the number of spokes 30 is not limited to ten.

In the present specification, any portion 21 of the rim 20 that is located between an adjoining pair of spokes is referred to as an "inter-spoke section". As shown in FIG. 1, the rim 20 includes a plurality (e.g., ten, as in the example shown) of inter-spoke sections 21.

In the example shown, the plurality of inter-spoke sections 21 include: inter-spoke sections (hereinafter referred to as the "first inter-spoke sections") 21A whose length along the circumferential direction is a first length L1; and inter-spoke sections (hereinafter referred to as the "second inter-spoke sections") 21B whose length along the circumferential direction is a second length L2 which is smaller than the first length L1. In other words, the plurality of inter-spoke sections 21 include relatively long first inter-spoke sections 21A and relatively short second inter-spoke sections 21B. In other words, the plurality of spokes 30 are disposed so that their intervals are non-uniform. In the example shown, the first inter-spoke sections 21A and the second inter-spoke sections 21B are disposed so as to alternate along the circumferential direction.

In the wheel 100 according to the present embodiment, in at least one inter-spoke section 21 among the plurality of inter-spoke sections 21, the thickness of the rim 20 at the midpoint on the axial direction (which may be simply referred to as the "rim wall thickness" hereinbelow) increases across an entire stretch from opposite ends of the inter-spoke section 21 to the substantial center of the inter-spoke section 21. In the present specification, a structure in which the rim wall thickness varies in this manner is referred to as a "thickness-inflating structure".

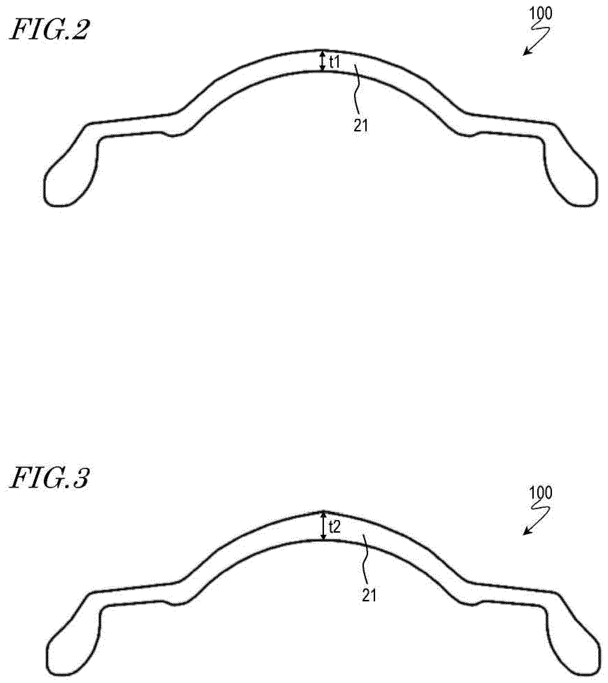

FIG. 2 shows a cross-sectional shape at one end of an inter-spoke section 21 having a thickness-inflating structure, and FIG. 3 shows a cross-sectional shape at the substantial center of the inter-spoke section 21 having a thickness-inflating structure. FIG. 2 and FIG. 3 are cross-sectional views taken along line 2A-2A' and line 3A-3A', respectively, in FIG. 1. In the case where the inter-spoke section 21 has a thickness-inflating structure, the rim wall thickness is largest at the substantial center of the inter-spoke section 21. Therefore, the rim wall thickness t2 at the substantial center of the inter-spoke section 21 (see FIG. 3) is larger than the rim wall thickness t1 at one end (or the other end) of the inter-spoke section 21 (see FIG. 2). As shown in FIG. 2 and FIG. 3, the inter-spoke section 21 does not include any protrusions such as ribs, on the inner side of the radial direction.

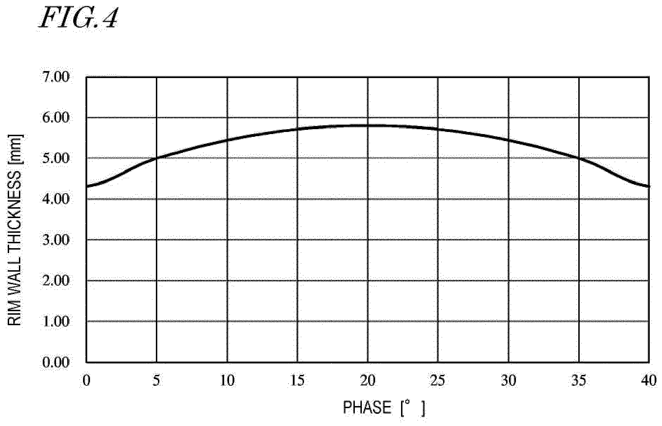

In the present embodiment, among the plurality of inter-spoke sections 21, at least the first inter-spoke sections 21A have a thickness-inflating structure. FIG. 4 shows a profile of rim wall thickness of a first inter-spoke section 21A along the circumferential direction. In FIG. 4, positions along the circumferential direction are expressed in terms of "phase". Phases 0° and 40° respectively correspond to one end and the other end of the first inter-spoke section 21A, while phase 20° corresponds to the substantial center of the first inter-spoke section 21A. As can be seen from FIG. 4, the rim wall thickness increases across an entire stretch from opposite ends of the first inter-spoke section 21A to the substantial center of the first inter-spoke section 21A. Stated otherwise, the rim wall thickness monotonically increases from one end to the substantial center of the first inter-spoke section 21A in the strict sense of the word, and monotonically increases from the other end to the substantial center of the first inter-spoke section 21A in the strict sense of the word. In other words, the first inter-spoke section 21A includes substantially no portion that stay at a constant and unchanging thickness; rather, the rim wall thickness keeps changing such that the rim wall thickness takes a maximum value only at the substantial center of the first inter-spoke section 21A.

In a conventionally-used, generic wheel, no inter-spoke sections of the rim have a thickness-inflating structure. In other words, the rim has a uniform wall thickness around its entirety. As a result of this, a difference occurs in the strength and/or rigidity of the rim between the neighborhoods of spokes and the substantial center of each inter-spoke section. Specifically, poorer strength and/or rigidity results away from the spokes (i.e., toward the substantial center of each inter-spoke section). However, setting a rim wall thickness that will give a sufficient strength to the substantial center of the inter-spoke section would result in a superfluous strength existing in the neighborhoods of spokes, thus inducing an increased weight.

On the other hand, the wheel for straddled vehicles according to the present teaching is configured so that, in at least one inter-spoke section 21, the thickness of the rim 20 at the midpoint on the axial direction (rim wall thickness) increases across an entire stretch from opposite ends of the inter-spoke section 21 to the substantial center of the inter-spoke section 21. Thus, a decrease in strength resulting away from the spokes 30 can be compensated for by an increased section modulus which will reduce a difference in strength between neighborhoods of the spokes 30 (opposite ends of the inter-spoke section 21) and the substantial center of the inter-spoke section 21. Moreover, since support from the spokes 30 provides some strength near the spokes 30, the rim wall thickness near the spokes 30 can be made smaller than the rim wall thickness at the substantial center of the inter-spoke section 21, whereby the entire rim 20 (or the entire wheel 100) can be reduced in weight. Furthermore, since a difference in rigidity between neighborhoods of the spokes 30 and the substantial center of the inter-spoke section 21 can be reduced, non-uniformity of the turning force when turning the vehicle can be reduced. This reduces non-uniformity of the input from the tire-wheel system to the vehicle body, thereby improving the handling stability of the vehicle.

Although FIG. 4 illustrates an example where a difference in rim wall thickness between opposite ends of the inter-spoke section 21 and the substantial center of the inter-spoke section 21 is 1.5 mm, it will be appreciated that the difference in rim wall thickness is not limited to this value. The difference in rim wall thickness is to be appropriately chosen in accordance with the length of each inter-spoke section 21, the material of the wheel 100, and the positioning, shape, etc., of the spokes 30. As has already been described, poorer strength and/or rigidity results away from the spokes 30; therefore, the rim wall thickness may be correspondingly increased so as to compensate for this.

In the inter-spoke section 21, a thickness-inflating structure can be formed by varying, along the circumferential direction, the distance D (see FIG. 1) from the wheel axis of the wheel 100 to the inner peripheral surface of the rim 20 at the midpoint on the axial direction. For example, by adjusting the shape of the work during casting, the distance D can be varied along the circumferential direction. When forming a thickness-inflating structure through varying the distance D along the circumferential direction, the rim shape on the outer side of the radial direction (i.e., on the tire side) can be formed through lathe turning, with the wheel axis serving as the center of rotation (similarly to the machining direction of conventional wheels), so that conventional wheel machining equipment can be used straightforwardly, without requiring additional costs.

As has already been described, the plurality of inter-spoke sections 21 include the relatively long first inter-spoke sections 21A and the relatively short second inter-spoke sections 21B. In this case, among the plurality of inter-spoke sections 21, the relatively long inter-spoke sections (first inter-spoke sections) 21A are likely to have a large difference in strength between neighborhoods of the spoke 30 and the substantial center of the inter-spoke section 21; therefore, it is preferable that the first inter-spoke sections 21A have a thickness-inflating structure. On the other hand, among the plurality of inter-spoke sections 21, the relatively short inter-spoke sections (second inter-spoke sections) 21B are less likely to have a large difference in strength between neighborhoods of the spoke 30 and the substantial center of the inter-spoke section 21; therefore, the second inter-spoke sections 21B do not need to have a thickness-inflating structure. Alternatively, the second inter-spoke sections 21B may have a thickness-inflating structure.

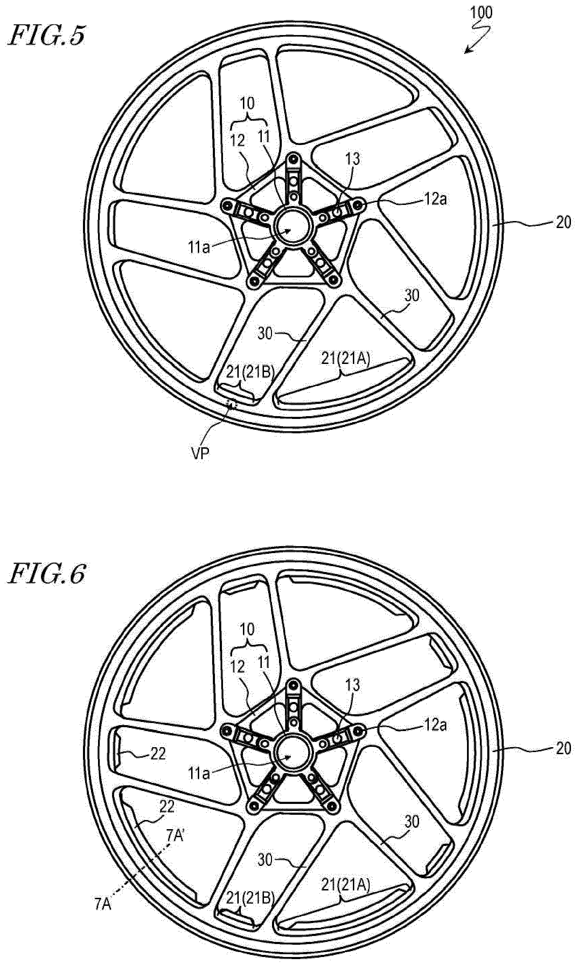

Although not shown in FIG. 1, the rim 20 of the wheel 100 has a valve hole through which an air valve is inserted. The valve hole is formed so as to extend through the rim 20. An example positioning of the valve hole is shown in FIG. 5. FIG. 5 shows a position VP at which the valve hole is formed.

In the example shown in FIG. 5, a second inter-spoke section 21B has a valve hole. Thus, when a valve hole is disposed in a relatively short inter-spoke section (second inter-spoke section) 21B among the plurality of inter-spoke sections 21, a spoke(s) 30 will be located relatively near the valve hole, whereby a decrease in strength around the valve hole can be suppressed. Although FIG. 5 illustrates an example where the position VP at which the valve hole is formed is located at the substantial center of the second inter-spoke section 21B, the position VP of the valve hole is not limited thereto. The valve hole may alternatively be formed at any position that is not the substantial center of the second inter-spoke section 21B.

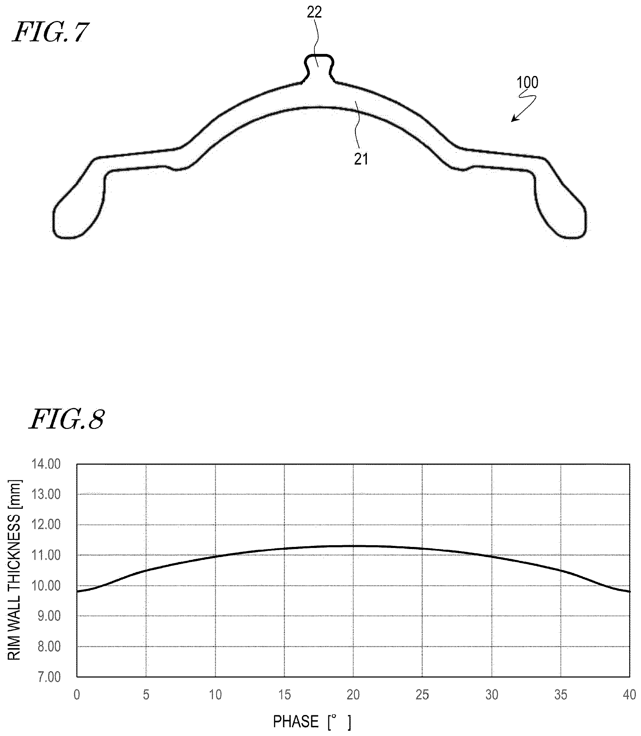

The plurality of inter-spoke sections 21 may have ribs on which to attach balancer weights. FIG. 6 and FIG. 7 show example configurations in which each inter-spoke section 21 includes such a rib 22. FIG. 6 is a side view showing a wheel 100 each of whose inter-spoke section 21 includes a rib 22. FIG. 7 is a cross-sectional view taken along line 7A-7A' in FIG. 6.

As shown in FIG. 6 and FIG. 7, on the inner side of the radial direction, each inter-spoke section 21 includes a rib 22 extending along the circumferential direction. The rib 22 is located at the substantial midpoint on the axial direction, and protrudes inwardly along the radial direction. By attaching a balancer weight(s) to the rib(s) 22, the weight balance of the wheel 100 can be adjusted.

FIG. 8 shows a profile of rim wall thickness of a first inter-spoke section 21A having a rib 22 along the circumferential direction. As shown in FIG. 8, the rim wall thickness increases across an entire stretch from opposite ends of the first inter-spoke section 21A to the substantial center of the first inter-spoke section 21A. In the case where the rib 22 is, too, conferring a thickness-inflating structure to at least one inter-spoke section 21 can provide the effects described above.

Although the above illustrates examples where the plurality of spokes 30 are disposed so that their intervals are non-uniform, the plurality of spokes 30 may alternatively be disposed at uniform intervals. In such a configuration, too, conferring a thickness-inflating structure to at least one inter-spoke section 21 among the plurality of inter-spoke sections 21 can provide similar effects.

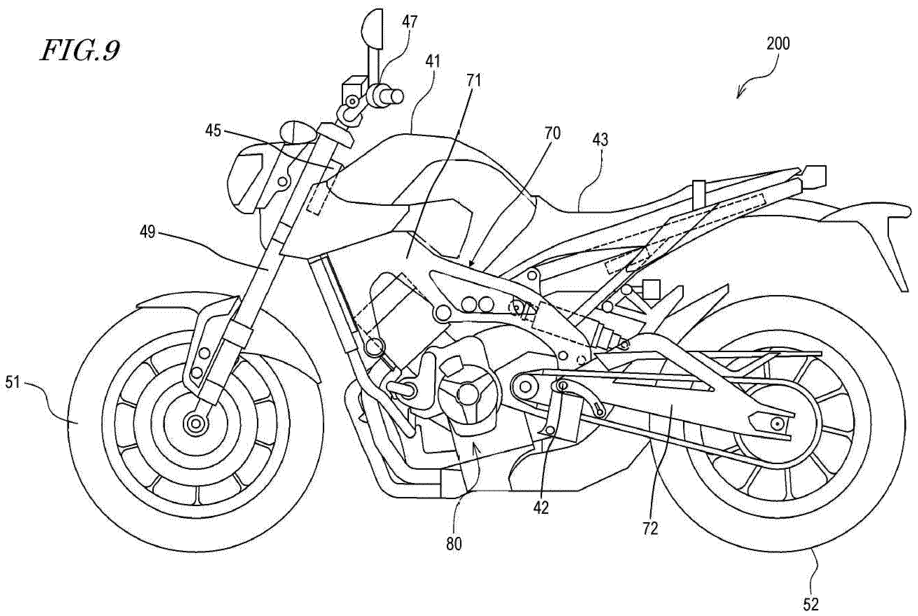

The wheel 100 according to an embodiment of the present teaching is suitably used in various straddled vehicles. FIG. 9 shows a motorcycle 200 as an example of a straddled vehicle. Although the motorcycle 200 shown in FIG. 9 is an on-road type motorcycle, the motorcycle may be a motorcycle of any other type, such as a so-called moped type, an off-road type, or a scooter type.

In the following description, "front", "rear", "right", and "left" respectively mean the front, rear, right, and left as viewed from a rider on the motorcycle 200. Herein, "up/above" and "down/below" respectively refer to the up/above direction and the down/below direction when the motorcycle 200 is stopped on the horizontal plane.

As shown in FIG. 9, the motorcycle 200 includes a fuel tank 41, a seat 43, an engine 80 (which is an internal combustion engine), and a body frame 70 supporting these elements. A head pipe 45 is provided at the front of the body frame 70. A steering shaft (not shown) is supported by the head pipe 45, with a handle bar 47 being provided at an upper portion of the steering shaft. Front forks 49 are provided at a lower portion of the steering shaft. A front wheel 51 is supported at lower end portions of the front forks 49 so as to be capable of rotating.

The body frame 70 includes a main frame 71 and a pair of rear arms 72. As shown in FIG. 9, The main frame 71 extends in an obliquely lower rear direction from the head pipe 5. The main frame 71 is linked to both of the pair of rear arms 72 via a pivot axis 43. A rear wheel 52 is supported at rear end portions of the pair of rear arms 72 so as to be capable of rotating.

The engine 80 is located below the main frame 71. The engine 80 is supported by the main frame 71 in a manner not capable of swinging.

In the motorcycle 200, the wheel according to an embodiment of the present teaching is to be used for at least one of the front wheel 51 and the rear wheel 52.

Although the motorcycle 200 has been exemplified as a straddled vehicle, the straddled vehicle is meant to be any automotive vehicle on which a rider straddles and rides, without being limited to motorcycles. The straddled vehicle may be a three-wheeled motorcycle (LMW) of a type whose direction of travel is changed as its body is tilted, or an ATV (All Terrain Vehicle) such as a buggy.

As described above, the wheel 100 for straddled vehicles according to an embodiment of the present teaching includes: a hub 10 through which a wheel shaft is to be inserted; an annular rim 20; and a plurality of spokes 30 connecting the hub 10 and the rim 20, wherein, the rim 20 includes a plurality of inter-spoke sections 21 each located between an adjoining pair of spokes 30 among the plurality of spokes 30; and, in at least one inter-spoke section 21 among the plurality of inter-spoke sections 21, the thickness of the rim 20 at a midpoint on the wheel axis direction increases across an entire stretch from opposite ends of the inter-spoke section 21 to the substantial center of the inter-spoke section 21.

The wheel 100 for straddled vehicles according to an embodiment of the present teaching is configured so that, in at least one inter-spoke section 21, the thickness of the rim 20 at the midpoint on the wheel axis direction (rim wall thickness) increases across an entire stretch from opposite ends of the inter-spoke section 21 to the substantial center of the inter-spoke section 21. Thus, a decrease in strength resulting away from the spokes 30 can be compensated for by an increased section modulus, such that a difference in strength between neighborhoods of the spokes 30 (opposite ends of the inter-spoke section 21) and the substantial center of the inter-spoke section 21 is reduced. Moreover, since support from the spokes 30 provides strength near the spokes 30, the rim wall thickness near the spokes 30 can be made smaller than the rim wall thickness at the substantial center of the inter-spoke section 21, whereby the entire rim 20 (or the entire wheel 100) can be reduced in weight. Furthermore, since a difference in rigidity between neighborhoods of the spokes 30 and the substantial center of the inter-spoke section 21 can be reduced, non-uniformity of the turning force when turning the vehicle can be reduced. This reduces non-uniformity of the input from the tire-wheel system to the vehicle body, thereby improving the handling stability of the vehicle.

In one embodiment, in the at least one inter-spoke section 21, the distance D from a wheel axis of the wheel 100 to an inner peripheral surface of the rim 20 at a midpoint on the wheel axis direction varies along a wheel circumference direction.

In the at least one inter-spoke section 21, by allowing the distance D from the wheel axis to the inner peripheral surface of the rim 20 at a midpoint on the wheel axis direction to vary along the wheel circumference direction, the rim wall thickness can be made to increase across an entire stretch from opposite ends of the inter-spoke section 21 to the substantial center of the inter-spoke section 21. As a result of this, the rim shape on the outer side of the wheel radius direction (i.e., on the tire side) can be formed through lathe turning, with the wheel axis serving as the center of rotation (similarly to the machining direction of conventional wheels), so that conventional wheel machining equipment can be used straightforwardly, without requiring additional costs.

In one embodiment, the plurality of inter-spoke sections 21 include a first inter-spoke section 21A having a first length L1 along the wheel circumference direction and a second inter-spoke section 21B having a second length L2 along the wheel circumference direction, the second length L2 being smaller than the first length L1.

The plurality of inter-spoke sections 21 may include: first inter-spoke sections 21A whose length along the wheel circumference direction is a first length L1; and second inter-spoke sections 21B whose length along the wheel circumference direction is a second length L2 which is smaller than the first length L1. In other words, the plurality of inter-spoke sections 21 may include relatively long first inter-spoke sections 21A and relatively short second inter-spoke sections 21B. In other words, the plurality of spokes 30 may be disposed so that their intervals are non-uniform.

In one embodiment, the at least one inter-spoke section 21 includes the first inter-spoke section 21A.

Among the plurality of inter-spoke sections 21, the relatively long inter-spoke sections (first inter-spoke sections) 21A are likely to have a large difference in strength between neighborhoods of the spoke 30 and the substantial center of the inter-spoke section 21; therefore, the first inter-spoke sections 21A are preferably configured so that the rim wall thickness increases across an entire stretch from opposite ends of the inter-spoke section 21 to the substantial center of the inter-spoke section 21.

In one embodiment, the at least one inter-spoke section 21 does not include the second inter-spoke section 21B.

Among the plurality of inter-spoke sections 21, the relatively short inter-spoke sections (second inter-spoke sections) 21B are less likely to have a large difference in strength between neighborhoods of the spoke 30 and the substantial center of the inter-spoke section 21; therefore, the second inter-spoke sections 21B do not need to be configured so that the rim wall thickness increases across an entire stretch from opposite ends of the inter-spoke section 21 to the substantial center of the inter-spoke section 21.

In one embodiment, the second inter-spoke section 21B includes a valve hole through which an air valve is to be inserted.

When a valve hole is disposed in a relatively short inter-spoke section (second inter-spoke section) 21B among the plurality of inter-spoke sections 21, a spoke(s) 30 will be located relatively near the valve hole, whereby a decrease in strength around the valve hole can be suppressed.

A straddled vehicle 200 according to an embodiment of the present teaching includes a wheel 100 for straddled vehicles having any of the aforementioned configurations.

The wheel 100 for straddled vehicles according to an embodiment of the present teaching is suitably used in various straddled vehicles.

According to an embodiment of the present teaching, there is provided a wheel for straddled vehicles which allows for suitable weight reduction while providing necessary strength. A wheel for straddled vehicles according to an embodiment of the present teaching is suitably used in various straddled vehicles.

## Claims

1. A wheel (100) for straddled vehicles comprising:
a hub (10) through which a wheel shaft is to be inserted;
an annular rim (20); and
a plurality of spokes (30) connecting the hub (10) and the rim (20), wherein,
the rim (20) includes a plurality of inter-spoke sections (21) each located between an adjoining pair of spokes (30) among the plurality of spokes (30), **characterized in that** in at least one inter-spoke section among the plurality of inter-spoke sections (21), thickness of the rim (20) at a midpoint on a wheel axis direction increases across an entire stretch from opposite ends of the inter-spoke section to a substantial center of the inter-spoke section.

2. The wheel (100) for straddled vehicles of claim 1, **characterized in that,** in the at least one inter-spoke section,
a distance (D) from a wheel axis of the wheel (100) to an inner peripheral surface of the rim (20) at a midpoint on the wheel axis direction varies along a wheel circumference direction.

3. The wheel (100) for straddled vehicles of claim 1 to 2, **characterized in that** the plurality of inter-spoke sections (21) include at least one first inter-spoke section (21A) having a first length (L1) along the wheel circumference direction and at least one second inter-spoke section (21B) having a second length (L2) along the wheel circumference direction, the second length (L2) being smaller than the first length (L1).

4. The wheel (100) for straddled vehicles of claim 3, **characterized in that** the at least one inter-spoke section comprises the first inter-spoke section (21A).

5. The wheel (100) for straddled vehicles of claim 4, **characterized in that** the at least one inter-spoke section does not comprise the second inter-spoke section (21B).

6. The wheel (100) for straddled vehicles of any of claims 3 to 5, **characterized in that** the second inter-spoke section (21B) includes a valve hole through which an air valve is to be inserted.

7. A straddled vehicle comprising the wheel (100) for straddled vehicles of any of claims 1 to 6.

## Patentansprüche

1. Ein Rad (100) für Spreiz-Sitz-Fahrzeuge, das umfasst:
eine Nabe (10), durch die eine Radwelle zu stecken ist;
einen ringförmigen Radkranz (20); und
eine Mehrzahl von Speichen (30), welche die Nabe (10) und den Radkranz (20) verbinden, wobei,
der Radkranz (20) eine Mehrzahl von Zwischenspeichenabschnitten (21) beinhaltet, die jeweils zwischen einem benachbarten Paar von Speichen (30) aus der Mehrzahl von Speichen (30) angeordnet sind, **dadurch gekennzeichnet, dass** in zumindest einem Zwischenspeichenabschnitt aus der Mehrzahl von Zwischenspeichenabschnitten (21) die Dicke des Radkranz (20) an einem Mittelpunkt in einer Radachsenrichtung über eine gesamte Strecke von gegenüberliegenden Enden des Zwischenspeichenabschnitts zu einer wesentlichen Mitte des Zwischenspeichenabschnitts zunimmt.

2. Das Rad (100) für Spreiz-Sitz-Fahrzeuge gemäß Anspruch 1, **dadurch gekennzeichnet, dass** in dem zumindest einen Zwischenspeichenabschnitt,
ein Abstand (D) von einer Radachse des Rades (100) zu einer inneren Umfangsfläche des Radkranz (20) an einem Mittelpunkt in der Radachsenrichtung entlang einer Radumfangsrichtung variiert.

3. Das Rad (100) für Spreiz-Sitz-Fahrzeuge gemäß Anspruch 1 bis 2, **dadurch gekennzeichnet, dass** die Mehrzahl von Zwischenspeichenabschnitte (21) zumindest einen ersten Zwischenspeichenabschnitt (21A) mit einer ersten Länge (L1) entlang der Radumfangsrichtung und zumindest einen zweiten Zwischenspeichenabschnitt (21B) mit einer zweiten Länge (L2) entlang der Radumfangsrichtung beinhalten, wobei die zweite Länge (L2) kleiner als die erste Länge (L1) ist.

4. Das Rad (100) für Spreiz-Sitz-Fahrzeuge gemäß Anspruch 3, **dadurch gekennzeichnet, dass** der zumindest eine Zwischenspeichenabschnitt den ersten Zwischenspeichenabschnitt (21A) umfasst.

5. Das Rad (100) für Spreiz-Sitz-Fahrzeuge gemäß Anspruch 4, **dadurch gekennzeichnet, dass** der zumindest eine Zwischenspeichenabschnitt nicht den zweiten Zwischenspeichenabschnitt (21B) umfasst.

6. Das Rad (100) für Spreiz-Sitz-Fahrzeuge gemäß irgendeinem der Ansprüche 3 bis 5, **dadurch gekennzeichnet, dass** der zweite Zwischenspeichenabschnitt (21B) ein Ventilloch beinhaltet, durch das ein Luftventil einzusetzen ist.

7. Ein Spreiz-Sitz-Fahrzeug, welches das Rad (100) für Spreiz-Sitz-Fahrzeuge von irgendeinem der Ansprüche 1 bis 6 umfasst.

## Revendications

1. Roue (100) pour véhicules à califourchon comprenant :
un moyeu (10) à travers lequel une tige d'axe de roue est à insérer ;
un bord annulaire (20) ; et
une pluralité de rayons (30) raccordant le moyeu (10) et le bord (20), dans lequel,
le bord (20) inclut une pluralité de sections inter-rayons (21) chacune localisée entre une paire de rayons adjacents (30) parmi la pluralité de rayons (30), **caractérisée en ce que** dans au moins une section inter-rayon parmi la pluralité de sections inter-rayons (21), une épaisseur du bord (20) au niveau d'un point médian sur une direction d'axe de roue augmente en travers d'un écart complet depuis des extrémités opposées de la section inter-rayon à un centre substantiel de la section inter-rayon.

2. La roue (100) pour véhicules à califourchon de la revendication 1, **caractérisée en ce que,** dans l'au moins une section inter-rayon,
une distance (D) depuis un axe de roue de la roue (100) à une surface périphérique intérieure du bord (20) au niveau d'un point médian sur la direction d'axe de roue varie le long d'une direction de circonférence de roue.

3. La roue (100) pour véhicules à califourchon de la revendication 1 ou 2, **caractérisée en ce que** la pluralité de sections inter-rayons (21) inclut au moins une première section inter-rayon (21A) présentant une première longueur (L1) le long de la direction de circonférence de roue et au moins une deuxième section inter-rayon (21B) présentant une deuxième longueur (L2) le long de la direction de circonférence de roue, la deuxième longueur (L2) étant plus petite que la première longueur (L1).

4. La roue (100) pour véhicules à califourchon de la revendication 3, **caractérisée en ce que,** l'au moins une section inter-rayon comprend la première section inter-rayon (21A).

5. La roue (100) pour véhicules à califourchon de la revendication 4, **caractérisée en ce que,** l'au moins une section inter-rayon ne comprend pas la deuxième section inter-rayon (21B).

6. La roue (100) pour véhicules à califourchon de l'une quelconque des revendications 3 à 5, **caractérisée en ce que** la deuxième section inter-rayon (21B) inclut un trou de valve à travers lequel une valve d'air est à insérer.

7. Véhicule à califourchon comprenant la roue (100) pour véhicules à califourchon de l'une quelconque des revendications 1 à 6.
